# EUROPEAN PATENT APPLICATION

(11) **EP 4 629 548 A1**
(43) Date of publication of application: **08.10.2025**
(21) Application number: 25166881.0
(22) Date of filing: 28.03.2025
(51) Int. Cl.: H04L 5/00, H04W 24/10

(54) **NETWORK-CONFIGURED SCHEDULING RESTRICTIONS TO IMPROVE THROUGHPUT**

(30) Priority: 03.04.2024 WO PCT/CN2024/085873
(71) Applicant: Apple Inc., Cupertino, CA 95014 (US)
(72) Inventor: LI, Qiming, Beijing, 100022 (CN); CUI, Jie, Cupertino, 95014 (US); ZENG, Wei, Cupertino, 95014 (US); YANG, Weidong, Cupertino, 95014 (US); TANG, Yang, Cupertino, 95014 (US); ZHANG, Dawei, Cupertino, 95014 (US); CHEN, Xiang, Cupertino, 95014 (US)
(74) Representative: Zacco Denmark A/S

(57) **Abstract**

The present application relates to devices and components including apparatus, systems, and methods for using network-configured scheduling restrictions to improve throughput. Particularly, a network can send to a user equipment (UE) configuration information that indicates a scheduling restriction pattern. Based on this pattern, the UE can determine, during a measurement time period (e.g., SMTC), whether a scheduling restriction applies to a component carrier or not. If the scheduling restriction applies, the UE can perform a measurement during the measurement time period on a reference signal received on the CC. Otherwise, the network can schedule, for the UE, a data transmission and/or a data reception on the CC during the measurement time period.

## Description

### CROSS-REFERENCE TO RELATED APPLICATIONS

This application claims the benefit of and priority to PCT International Application No. PCT/CN2024/085873, filed on April 3, 2024, which is incorporated by reference herein in its entirety for all purposes.

### BACKGROUND

Fifth generation mobile network (5G) is a wireless standard that aims to improve upon data transmission speed, reliability, availability, and more. This standard, while still developing, includes numerous details relating to carrier aggregation (CA), where, for instance, a higher data rate may be achieved by using multiple component carriers (CCs) for communications of a user equipment (UE).

### BRIEF DESCRIPTION OF THE DRAWINGS

FIG. 1 illustrates an example of a network environment, in accordance with some embodiments.
FIG. 2 illustrates an example of two-searcher based measurements, in accordance with some embodiments.
FIG. 3 illustrates an example of multi-component carrier measurements, in accordance with some embodiments.
FIG. 4 illustrates an example of simultaneous multi-component carrier measurements and data communications, in accordance with some embodiments.
FIG. 5 illustrates another example of simultaneous multi-component carrier measurements and data communications, in accordance with some embodiments.
FIG. 6 illustrates yet another example of simultaneous multi-component carrier measurements and data communications, in accordance with some embodiments.
FIG. 7 illustrates an example of simultaneous channel state information reference signal (CSI-RS) measurements and data communications, in accordance with some embodiments.
FIG. 8 illustrates an example of simultaneous gap-less inter-frequency measurements and data communications, in accordance with some embodiments.
FIG. 9 illustrates an example of simultaneous network controlled small gap (NCSG) and data communications, in accordance with some embodiments.
FIG. 10 illustrates an example of an operational flow/algorithmic structure for simultaneous multi-component carrier measurements and data communications, in accordance with some embodiments.
FIG. 11 illustrates another example of an operational flow/algorithmic structure for simultaneous multi-component carrier measurements and data communications, in accordance with some embodiments.
FIG. 12 illustrates an example of receive components, in accordance with some embodiments.
FIG. 13 illustrates an example of a UE, in accordance with some embodiments.
FIG. 14 illustrates an example of a base station, in accordance with some embodiments.

### DETAILED DESCRIPTION

Embodiments of the present disclosure are directed to, among other things, network-configured scheduling restrictions to improve throughput. Generally, carrier aggregation (CA) can be used to increase a throughput of communications between a user equipment (UE) and a network (e.g., including a base station). CA enables reception and/or transmission using multiple component carriers (CCs). The network can configure the UE to use a plurality CCs and can configure measurement objects for the UE such that the UE periodically performs measurements on reference signals sent on the CCs. However, performing the measurements can impact the throughput. Particularly, when the UE performs measurements on two CCs, conventionally no data communication (e.g. uplink data transmission and/or downlink data reception) can be scheduled on the remaining CCs. In contrast, the embodiments of the present disclosure enable the data communication to occur simultaneously with the reference signal measurements on the two (or more) CCs. By doing so, the throughput can be improved relative to the conventional scheduling restrictions. In an example, the network configures the UE with a pattern of a scheduling restriction. The pattern can indicate, during a measurement time period in which reference signal measured on multiple CCs, whether another CC is usable for the data communication. In case the CC is usable, the UE can receive and/or transmit data during that same measurement time period, thereby improving the data communication throughput (because, otherwise, the CC's use would have been restricted and no data communication would have occurred).

Embodiments of the present disclosure are described in connection with 5G networks. However, the embodiments are not limited as such and similarly apply to other types of communication networks including other types of cellular networks.

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

The following is a glossary of terms that may be used in this disclosure.

The term "circuitry" as used herein refers to, is part of, or includes hardware components, such as an electronic circuit, a logic circuit, a processor (shared, dedicated, or group) or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE'' as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "base station" as used herein refers to a device with radio communication capabilities, that is a network component of a communications network (or, more briefly, a network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, etc.

The term "network" as used herein reference to a communications network that includes a set of network nodes configured to provide communications functions to a plurality of user equipment via one or more base stations. For instance, the network can be a public land mobile network (PLMN) that implements one or more communication technologies including, for instance, 5G communications.

The term "computer system" as used herein refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "3GPP Access" refers to accesses (e.g., radio access technologies) that are specified by 3GPP standards. These accesses include, but are not limited to, GSM/GPRS, LTE, LTE-A, and/or 5G NR. In general, 3GPP access refers to various types of cellular access technologies.

The term "Non-3GPP Access" refers any accesses (e.g., radio access technologies) that are not specified by 3GPP standards. These accesses include, but are not limited to, WiMAX, CDMA2000, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC), whereas untrusted non-3GPP accesses interwork with the EPC/5GC via a network entity, such as an Evolved Packet Data Gateway and/or a 5G NR gateway. In general, non-3GPP access refers to various types on non-cellular access technologies.

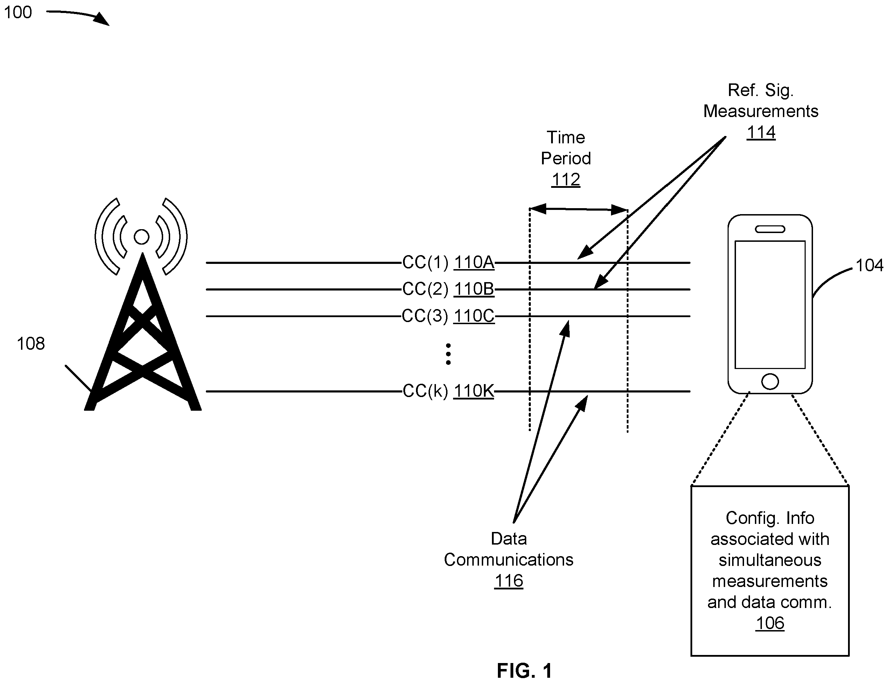

FIG. 1 illustrates a network environment 100, in accordance with some embodiments. The network environment 100 may include a UE 104 and a gNB 108. The gNB 108 may be a base station that provides a wireless access cell, for example, a Third Generation Partnership Project (3GPP) New Radio (NR) cell, through which the UE 104 may communicate with the gNB 108. The UE 104 and the gNB 108 may communicate over an air interface compatible with 3GPP technical specifications, such as those that define Fifth Generation (5G) NR system standards.

The gNB 108 may transmit information (for example, data and control signaling) in the downlink direction by mapping logical channels on the transport channels and transport channels onto physical channels. The logical channels may transfer data between a radio link control (RLC) and MAC layers; the transport channels may transfer data between the MAC and PHY layers; and the physical channels may transfer information across the air interface. The physical channels may include a physical broadcast channel (PBCH), a physical downlink control channel (PDCCH), and a physical downlink shared channel (PDSCH).

The PBCH may be used to broadcast system information that the UE 104 may use for initial access to a serving cell. The PBCH may be transmitted along with physical synchronization signals (PSS) and secondary synchronization signals (SSS) in a synchronization signal block (SSB). The SSBs may be used by the UE 104 during a cell search procedure (including cell selection and reselection) and for beam selection.

The PDSCH may be used to transfer end-user application data, signaling radio bearer (SRB) messages, system information messages (other than, for example, MIB), and SIs.

The PDCCH may transfer DCI that is used by a scheduler of the gNB 108 to allocate both uplink and downlink resources. The DCI may also be used to provide uplink power control commands, configure a slot format, or indicate that preemption has occurred.

The gNB 108 may also transmit various reference signals to the UE 104. The reference signals may include demodulation reference signals (DMRSs) for the PBCH, PDCCH, and PDSCH. The UE 104 may compare a received version of the DMRS with a known DMRS sequence that was transmitted to estimate an impact of the propagation channel. The UE 104 may then apply an inverse of the propagation channel during a demodulation process of a corresponding physical channel transmission.

The reference signals may also include CSI-RS. The CSI-RS may be a multipurpose downlink transmission that may be used for CSI reporting, beam management, connected mode mobility, radio link failure detection, beam failure detection and recovery, and fine-tuning of time and frequency synchronization.

The reference signals and information from the physical channels may be mapped to resources of a resource grid. There is one resource grid for a given antenna port, subcarrier spacing configuration, and transmission direction (for example, downlink or uplink). The basic unit of an NR downlink resource grid may be a resource element, which may be defined by one subcarrier in the frequency domain and one orthogonal frequency division multiplexing (OFDM) symbol in the time domain. Twelve consecutive subcarriers in the frequency domain may compose a physical resource block (PRB). A resource element group (REG) may include one PRB in the frequency domain, and one OFDM symbol in the time domain, for example, twelve resource elements. A control channel element (CCE) may represent a group of resources used to transmit PDCCH. One CCE may be mapped to a number of REGs (for example, six REGs).

The UE 104 may transmit data and control information to the gNB 108 using physical uplink channels. Different types of physical uplink channels are possible including, for instance, a physical uplink control channel (PUCCH) and a physical uplink shared channel (PUSCH). Whereas the PUCCH carries control information from the UE 104 to the gNB 108, such as uplink control information (UCI), the PUSCH carries data traffic (e.g., end-user application data), and can carry UCI.

The UE 104 and the gNB 108 may perform beam management operations to identify and maintain desired beams for transmission in the uplink and downlink directions. The beam management may be applied to both PDSCH and PDCCH in the downlink direction, and PUSCH and PUCCH in the uplink direction.

In an example, communications with the gNB 108 and/or the base station can use channels in the frequency range 1 (FR1), frequency range 2 (FR2), and/or a higher frequency range (FRH). The FR1 band includes a licensed band and an unlicensed band. The NR unlicensed band (NR-U) includes a frequency spectrum that is shared with other types of radio access technologies (RATs) (e.g., LTE-LAA, WiFi, etc.). A listen-before-talk (LBT) procedure can be used to avoid or minimize collision between the different RATs in the NR-U, whereby a device should apply a clear channel assessment (CCA) check before using the channel.

In an example, the UE 104 supports carrier aggregation (CA), whereby the UE 104 can connect and exchange data simultaneously over multiple component carriers (CCs) with the gNB 108 and/or another base station(s). The CCs can belong to the same frequency band, in which case they are referred to as intra-band CCs. Intra-band CCs can be contiguous or non-contiguous. The CCs can also belong to different frequency bands, in which case they are referred to as inter-band CCs. A serving cell can be configured for the UE 104 to use a CC. A serving cell can be a primary (PCell), a primary secondary cell (PSCell), or a secondary cell (SCell). Multiple SCells can be activated via an SCell activation procedures where the component carriers of these serving cells can be intra-band contiguous, intra-band noon-contiguous, or inter-band. The serving cells can be collocated or non-collocated.

To improve resource usage when CA is configured (e.g., including usage of PRBs available on CCs to improve throughput), the UE 104 can receive and store configuration information 106 from the gNB 106. This configuration information 106 represents a network-based configuration associated with simultaneous measurements and data communications. In particular, the configuration information 106 configures the UE 104 to perform reference signal measurements 114 during a time period. These reference signal measurements 114 are performed using configured measurement occasions on at least two CCs configured for the CA (illustrated in FIG. 1 as a first CC 110A and a second CC 110B). The configuration information 106 also configures the UE to, during that same time period 112, perform data communications 116 (e.g., to transmit and/or receive data) on one or more of the remaining CCs configured for the CA (illustrated on FIG. 1, as a third CC 110C and all the way to a *k^{th}* CC 110K). For example, although a measurement occasion is configured on the third CC 110C and is scheduled during the time period 112, the configuration information 106 can indicate that the UE 104 can transmit and/or receive data during the time period 112 because the first and second CCs 110A and 110B are being measured. Examples of the configuration information and its use are further described herein below.

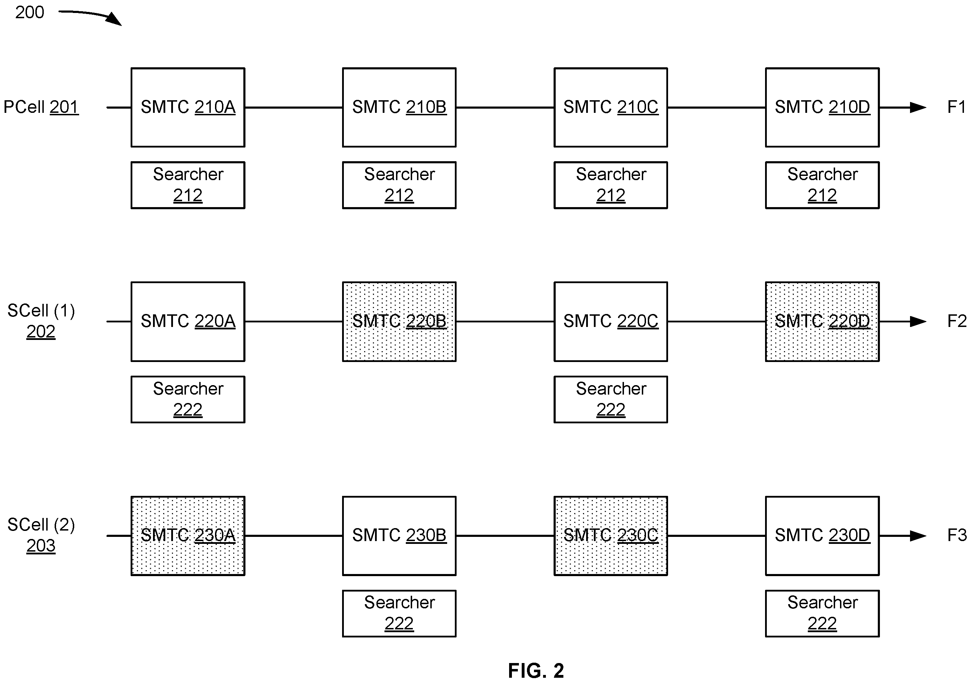

FIG. 2 illustrates an example 200 of two-searcher based measurements, in accordance with some embodiments. In an example, a network configures multiple CCs for a UE in support of CA. A PCell 201 can use a CC of the configured CCs (having a center frequency F1). Similarly, a first SCell 202 can use a first CC of the configured CCs (having a center frequency of F2), and a second SCell 203 can use a second SCC of the configured CCs (having a center frequency of F3). Of course, the number and types of cells is used herein for illustrative purposes only. A different number and/or other types are possible. A UE may use searchers to search for reference signals and perform measurements thereon. Typically, the user may implement two searchers, each corresponding to one of the UE's radio frequency (RF) receive chains. Conventionally, the UE implementation can specify which component carriers are searched during a measurement time period. Typically, the component carrier of the PCell 201 is searched, whereas a selection is made for searching the secondary component carriers (SCCs-the ones corresponding to the SCell 202 and 203).

The measurements can include radio resource management (RRM) measurements. Generally, the RRM measurements can involve measurement gaps and/or scheduled restrictions, whereby no data communication can occur during a measurement gap or upon a scheduled restriction. Enhancements can be made to enable transmission/reception in gaps/restrictions that are caused by RRM measurements (from inter-frequency RRM measurement gaps, or intra-frequency measurements, or other scheduling restrictions etc.).

As far as measurement gaps, when the UE needs to measure reference signal that is not covered by the UE RF bandwidth, typically a measurement gap is needed. During the measurement gap, the UE cannot be scheduled with data because the UE would tune its RF chain away from the serving frequency to the target frequency. When the reference signal can be covered by the UE RF bandwidth, a measurement gap may not be needed.

However, sometimes the UE cannot be scheduled for data communications even though RF tuning/retuning is not needed. Other causes can result in scheduling restrictions. For example, when a target SSB to measure has different numerology than a numerology (e.g., or, equivalently, subcarrier spacing) of a serving cell's PDCCH/PDSCH, and when the UE does not support simultaneous reception of data and SSB with different numerology (e.g., "simultaneousRxDataSSB-DiffNumerology"), a scheduling restriction can be imposed, whereby the data reception cannot be scheduled during the measurement time period of the target SSB. In another example, a target SSB to measure may collide with the serving cell's uplink slot. Here, the scheduling restriction can be imposed that prevents transmission in the uplink slot. Further, when time division duplex (TDD) inter-band carrier aggregation is performed, a scheduling restriction due to a given serving cell can also apply to another serving cell in a different band on the symbols that fully or partially overlap with the restricted symbols, if UE does not have the capability of supporting reception and transmission on intra-band as part of CA (e.g., simultaneousRxTxInterBandCA) for this band pair. Like the use of measurement gaps, the use of scheduling restriction can result in throughput degradation.

In an example, to reduce its power consumption, the UE can deactivate (e.g., turn off or enter a power save mode) some or all of its RF components (e.g., transmission components and/or reception components) during a discontinuous reception (DRX) cycle. Nonetheless, the UE can wake up to receive SSBs (or other reference signals, such as CSI-RS as further described herein below) transmitted from the network (e.g. by a gNB). During an active state of the DRX cycle, the UE enables activates its RF components to receive SSBs during a time window. The time window during which the UE wakes up (e.g., equivalently, needs to be in the active state) can be pre-configured. For instance, this time window can be an SSB measurement timing configuration (SMTC) window.

Generally, an SMTC represents a configuration for a measurement occasion during which a measurement object (e.g., one corresponding to SSB) can be measured. FIG. 2 illustrates a configuration that repeats periodically (e.g., after every 5 milliseconds, or some other periodicity) across the different cells 201-203. For the PCell 201, four SMTC windows are shown and are labeled SMTC 210A, SMTC 210B, SMTC 210C, and SMTC 210D. Similarly, for the first SCell 202, four SMTC windows are shown and are labeled SMTC 220A, SMTC 220B, SMTC 220C, and SMTC 220D. Their timing may be the same as that of the SMTC windows of the PCell 201. Here also, for the second SCell 203, four SMTC windows are shown and are labeled SMTC 230A, SMTC 230B, SMTC 230C, and SMTC 230D. Their timing may be the same as that of the SMTC windows of the PCell 201.

The UE implements two searchers: a first searcher 212 and a second searcher 222. Therefore, the UE can measure two different intra-frequency CCs in each measurement occasion. However, which CC to measure is up to UE implementation (e.g., is unknown to the network). FIG. 2 shows one possible implementation of the searchers for illustrative purposes. Other implementations are also possible.

The first searcher 212 is used to search for the SSBs sent on the SCC of the PCell 201 during all four measurement occasions (e.g., all four SMTC windows labeled SMTC 210A-210D). The second searcher 222 is used to search for SSBs sent on the first SCC of the first SCell 202 and SSBs sent on the second SCC of the second SCell 203. The second searcher 222 does not search both of these SCCs during the same SMTC window. Instead, the search alternates between the two SCCs: during a first SMTC window, the searcher 222 searches on the first SCC but not the second SCC, whereas during a next SMTC window, the searcher 222 searches on the second SCC but not the first SCC, and so on. The SCC that is not searched during an SMTC window is shown with a dotted rectangle during that time window. In particular, on the first SCC of the first SCell 202, the second searcher 222 is used during the first SMTC window (labeled as SMTC 220A) and the third SMTC window (labeled as SMTC 220C). In comparison, on the second SCC of the second SCell 203, the second searcher 222 is used during the second SMTC window (labeled as SMTC 230B) and the fourth SMTC window (labeled as SMTC 230D).

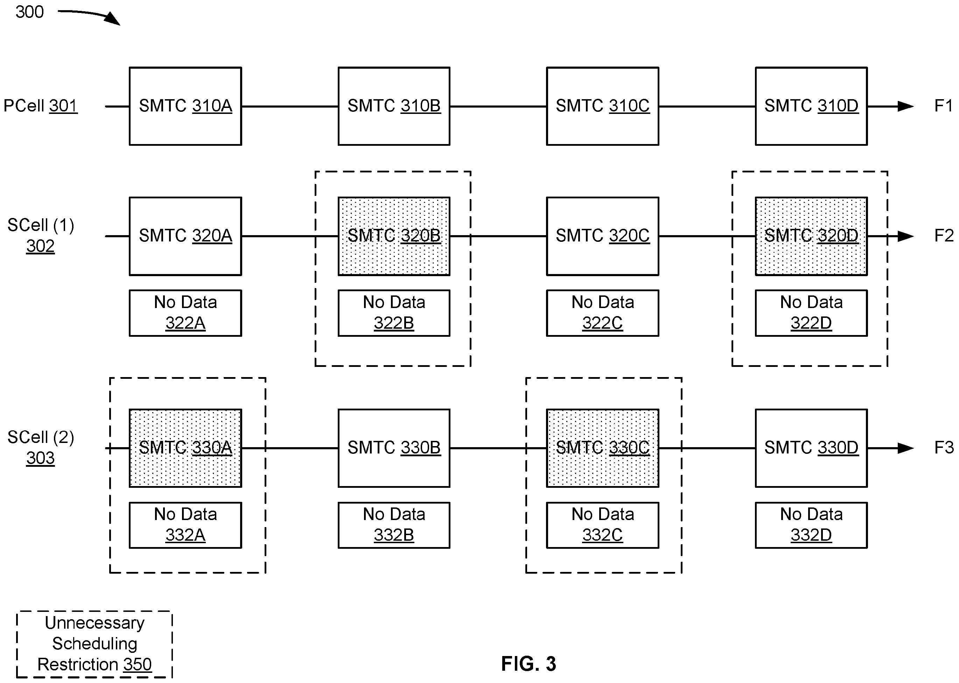

FIG. 3 illustrates an example 300 of multi-component carrier measurements, in accordance with some embodiments. The example 300 continues with the illustration of FIG. 2. In particular, a network configures multiple CCs for a UE in support of CA. A PCell 301 can use a CC of the configured CCs (having a center frequency F1). Similarly, a first SCell 302 can use a first SCC of the configured CCs (having a center frequency of F2), and a second SCell 303 can use a second SCC of the configured CCs (having a center frequency of F3).

For the PCell 301, four SMTC windows are shown and are labeled SMTC 310A, SMTC 310B, SMTC 310C, and SMTC 310D. Similarly, for the first SCell 302, four SMTC windows are shown and are labeled SMTC 320A, SMTC 320B, SMTC 320C, and SMTC 320D. Their timing may be the same as that of the SMTC windows of the PCell 301. Here also, for the second SCell 303, four SMTC windows are shown and are labeled SMTC 330A, SMTC 330B, SMTC 330C, and SMTC 330D. Their timing may be the same as that of the SMTC windows of the PCell 301.

The UE implements two searchers, similar to the first searcher 212 and the second searcher 222. On the CC of the PCell 301, a first SSB can be measured during the SMTC 310A, a second a SSB can be measured during the SMTC 310B, a third SSB can be measured during the SMTC 310C, and a fourth SSB can be measured during the SMTC 310D. On the first SCC of the first SCell 302, a first SSB can be measured during the SMTC 320A and a second a SSB can be measured during the SMTC 320C. On the second SCC of the second SCell 303, a first SSB can be measured during the SMTC 330B and a second a SSB can be measured during the SMTC 330D.

A measurement gap or a scheduling restriction can be applied during an SMTC window. As such, the UE may not be able to receive and/or transmit data using an SCC that is not searched during the SMTC time window. In FIG. 3, this lack of ability is shown with dashed rectangles labeled unnecessary scheduling restrictions.

Particularly, the second searcher searches the first SCC of the first SCell 302 during the SMTC 320A and no data 322A can be sent during that time on the first SCC. Although the second SCC of the second SCell 303 is not searched during the SMTC 330A, also no data 332A can be sent on the second SCC because of the measurement gap and/or scheduling restriction, resulting in a possible throughput decrease.

Next, the second searcher searches the second SCC of the second SCell 303 during the next SMTC 330B and no data 332B can be sent during that time on the second SCC. Although the first SCC of the first SCell 302 is not searched during the SMTC 320B, also no data 322B can be sent on the first SCC because of the measurement gap and/or scheduling restriction, resulting in a possible throughput decrease.

This throughput decrease continues. Particularly, the second searcher searches the first SCC of the first SCell 302 during the SMTC 320C and no data 322C can be sent during that time on the first SCC. Although the second SCC of the second SCell 303 is not searched during the SMTC 330C, also no data 332C can be sent on the second SCC because of the measurement gap and/or scheduling restriction.

Similarly, the second searcher searches the second SCC of the second SCell 303 during the next SMTC 330D and no data 332D can be sent during that time on the second SCC. Although the first SCC of the first SCell 302 is not searched during the SMTC 320D, also no data 322D can be sent on the first SCC because of the measurement gap and/or scheduling restriction, resulting in a possible throughput decrease.

As such, when measurements on the first and second SCells 202 and 203 would result in scheduling restriction (e.g. because the SSBs have different subcarrier spacing from PDCCH/PDSCH and the UE does not support simultaneousRxDataSSB-DiffNumerology), the UE cannot perform data reception and/or data transmission with the first and second SCells 202 and 203 when measuring SSB during SMTC on the corresponding carrier. However, since the network does not know which carrier UE is going to measure during each SMTC occasion, the network may assume both the first and second SCells 202 and 203 cannot be scheduled for data communication during each SMTC occasion. Of course, the more configured active Cells (e.g., SCells), the more unnecessary scheduling restrictions can exist, resulting in more throughput decrease.

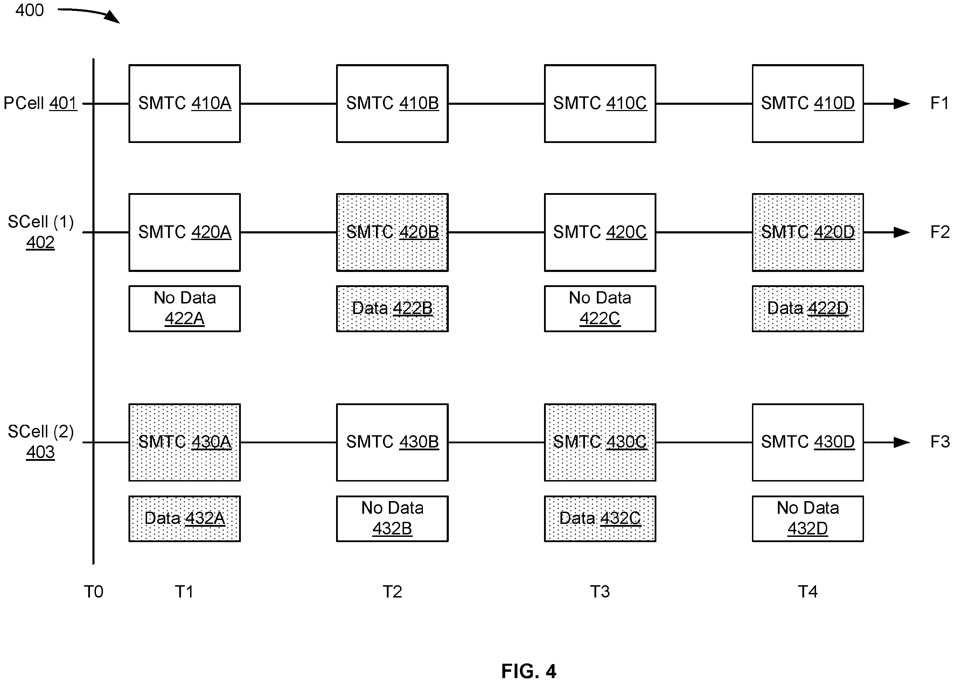

FIG. 4 illustrates an example 400 of simultaneous multi-component carrier measurements and data communications, in accordance with some embodiments. Unlike the approach of FIG. 3, here the network configures the UE with particular scheduling restrictions (e.g., using a pattern known to the network) such that to relatively increase the throughput. According to the configured scheduling restrictions, the UE can be enabled to receive and/or transmit data on a CC simultaneously with performing measurements on two other CCs.

The example 400 continues with the illustration of FIG. 2. In particular, a network configures multiple CCs for a UE in support of CA. A PCell 401 can use a CC of the configured CCs (having a center frequency F1). Similarly, a first SCell 402 can use a first SCC of the configured CCs (having a center frequency of F2), and a second SCell 403 can use a second SCC of the configured CCs (having a center frequency of F3).

For the PCell 401, four SMTC windows are shown and are labeled SMTC 410A, SMTC 410B, SMTC 410C, and SMTC 410D. Similarly, for the first SCell 402, four SMTC windows are shown and are labeled SMTC 420A, SMTC 420B, SMTC 420C, and SMTC 420D. Their timing may be the same as that of the SMTC windows of the PCell 401. Here also, for the second SCell 403, four SMTC windows are shown and are labeled SMTC 430A, SMTC 430B, SMTC 430C, and SMTC 430D. Their timing may be the same as that of the SMTC windows of the PCell 401.

The UE implements two searchers, similar to the first searcher 212 and the second searcher 222. On the CC of the PCell 401, a first SSB can be measured during the SMTC 410A, a second a SSB can be measured during the SMTC 410B, a third SSB can be measured during the SMTC 410C, and a fourth SSB can be measured during the SMTC 410D.

On the SCCs, the UE relies on configuration information to determine which SCC to measure during an SMTC window and which CC can be used for data communication during the SMTC window. In the illustration of FIG. 4, on the first SCC of the first SCell 402, a first SSB can be measured during the SMTC 420A and a second a SSB can be measured during the SMTC 420C. On the second SCC of the second SCell 403, a first SSB can be measured during the SMTC 430B and a second a SSB can be measured during the SMTC 430D.

Accordingly, the second searcher searches the first SCC of the first SCell 402 during the SMTC 420A and no data 422A can be sent during that time on the first SCC. The configuration information indicates that the second SCC of the second SCell 403 is unrestricted during the SMTC 430A. As such, data 432A can be sent on the second SCC during the SMTC 430A, resulting in a possible throughput increase.

Next, the second searcher searches the second SCC of the second SCell 403 during the next SMTC 430B and no data 432B can be sent during that time on the second SCC. The configuration information indicates that the first SCC of the first SCell 402 is unrestricted during the SMTC 420B. As such, data 422B can be sent on the first SCC during the SMTC 420B, resulting in a possible throughput increase.

This throughput increase continues. Particularly, the second searcher searches the first SCC of the first SCell 402 during the SMTC 420C and no data 422C can be sent during that time on the first SCC. The configuration information indicates that the second SCC of the second SCell 403 is unrestricted during the SMTC 430C. As such, data 432C can be sent on the second SCC during the SMTC 430C, resulting in a possible throughput increase.

Similarly, the second searcher searches the second SCC of the second SCell 403 during the next SMTC 430D and no data 432D can be sent during that time on the second SCC. The configuration information indicates that the first SCC of the first SCell 402 is unrestricted during the SMTC 420D. As such, data 422D can be sent on the first SCC during the SMTC 420D, resulting in a possible throughput increase.

When compared to the approach of FIG. 3, the throughput on the two SCCs is doubled because additional data can be sent during time periods that would have been otherwise restricted to measurements only. The additional data and corresponding time periods on the relevant SCCs are illustrated in FIG. 4 with dotted rectangles.

**In** an example, the configuration information indicates a pattern of applying a scheduling restriction to the plurality of CCs over time (e.g., the SCCs). The scheduling restriction being applied to a CC during a time period indicates that the CC is unusable for communicating data during the time period. In comparison, the scheduling restriction being unapplied to the CC indicates during the time period that the CC is usable for communication the data during the time period.

The scheduling restriction can include a scheduling restriction window. The time length of the scheduling restriction window can be the same or different (e.g., shorter) than that of an SMTC window. For example, the entire duration of an SMTC window can be scheduling restricted or scheduling unrestricted as applicable. In another example, only a portion of the SMTC window (e.g., half it) can be occupied by the scheduling restriction window. The configuration information can indicate a pattern of applying the scheduling restriction window to the CCs over time (e.g., the SCCs). For a CC, the pattern can indicate whether the scheduling restriction window applies to it. If the scheduling restriction window is applied, not data can be scheduled for reception and/or transmission on the CC during the scheduling restriction window. Otherwise, the reception and/or transmission can be scheduled.

Generally, a measurement object can be scheduled on a CC during a scheduling restriction window. Data reception and/or transmission is scheduled outside of the scheduling restriction window. As such, if the scheduling restriction window applies to the CC, the measurement object is measured. Otherwise, the measurement object is not measured and, instead, data reception and/or transmission can be performed.

In the above examples, the configuration information indicates the pattern by indicating whether a measurement object configured on a CC is to be measured or not. The configuration information also indicates a repetition of the pattern after a number of measurement occasions.

In a specific illustration of the pattern, the configuration information indicates a bitmap string "(Fᵢ, Fᵢ₊₁, ..., Fᵢ₊ₙ)." "Fᵢ" corresponds to an i^{th} measurement object and represents at least one of a cell identifier, a physical cell identifier, a measurement object identifier, or an absolute radio frequency channel number ARFCN). "n" represents a total number of measurement objects to which the scheduling restriction applies at any time. The pattern repeats every "m" measurement occasions, wherein "m" can be the total number of measurement objects that share the same searcher. The first measurement occasion starts after a reference time "T0." This reference time can correspond to a particular sub-frame number (SFN) and/or a particular slot number (e.g., "SFN#0" or "slot#0").

Referring to FIG. 4, "n" is equal to two (because two SCCs are configured), and "m" is also two. As such, the bitmap string is "(F₂, F₃)" and repeats every two measurement occasions. The first measurement object is at "T1" during SMTC 420A and SMTC 430A. Per the pattern, "F2" is restricted and corresponds to the first SCell 402. Accordingly, no data 422A on the first SCC of the first SCell 402 can be communicated during "T1." However, per this pattern, the second SCell 403 is unrestricted. Accordingly, the data 432A can be communicated during "T1."

The second measurement object is at "T2" during SMTC 420B and SMTC 430B. Per the pattern, "F3" is now restricted and corresponds to the second SCell 403. Accordingly, no data 432A on the second SCC of the second SCell 403 can be communicated during "T2." However, per this pattern, the first SCell 402 is unrestricted. Accordingly, the data 422B can be communicated during "T2."

Next, the pattern repeats (after the second measurement occasion since "m" is two). The third measurement object is at "T3" during SMTC 420C and SMTC 430C. As repeated, the pattern indicates that "F2" is restricted. "F2" corresponds to the first SCell 402. Accordingly, no data 422C on the first SCC of the first SCell 402 can be communicated during "T3." However, per this pattern, the second SCell 403 is unrestricted. Accordingly, the data 432C can be communicated during "T3."

The fourth measurement object is at "T4" during SMTC 420D and SMTC 430D. As repeated, the pattern indicates that "F3" is now restricted. "F3" corresponds to the second SCell 403. Accordingly, no data 432D on the second SCC of the second SCell 403 can be communicated during "T4." However, per this pattern, the first SCell 402 is unrestricted. Accordingly, the data 422D can be communicated during "T4."

In an example, the network configures CA and measurement objects. The network also indicates actual scheduling restriction window to the UE (e.g., via RRC configuration, e.g. together with a measurement object configuration). For instance, the network configures a bitmap string X to the UE. The pattern X can be set as "X=(Fᵢ, Fᵢ₊₁, Fᵢ₊₂, ..., Fᵢ₊ₙ)," where "Fᵢ" is the *i^{th}* measurement object which is measured with scheduling restriction and can be specified as cell ID, PCI, measurement object ID, ARFCN and so on, and where "n" is the total number of measurement objects which are measured with scheduling restriction. The bitmap string can be used as following. Starting from the first measurement occasion after "T0" (e.g., "SFN#0," "slot#0"), a scheduling restriction applies on "Fᵢ" in the first measurement occasion, scheduling restriction applies on "Fᵢ₊₁" in the second measurement occasion, and so on. The pattern X repeats every "m" measurement occasion, where "m" is the total number of measurement objects that share the same searcher. In case of CA, "m" can be the total number of SCells configured with intra-frequency measurement objects.

Next, the network can schedule data on each carrier outside the actual scheduling restriction window. The UE performs measurement according to the configured pattern X. The UE needs to respond to the network scheduling during an SMTC window outside an actual scheduling restriction window on a CC.

In the above description, the use of a scheduling restriction is disclosed. Conversely and equivalently, a scheduling availability can be used. In particular, a scheduling availability can apply to a CC during a time period. The applicability of the scheduling availability indicates that data communication on the CC can be scheduled during the time period. Inapplicability of the scheduling availability indicates that only measurements on the CC can be performed during the time period. As such, the configuration information can similarly indicate the scheduling availability (e.g., by using a pattern expressed as a bitmap string with a repetition parameter "m").

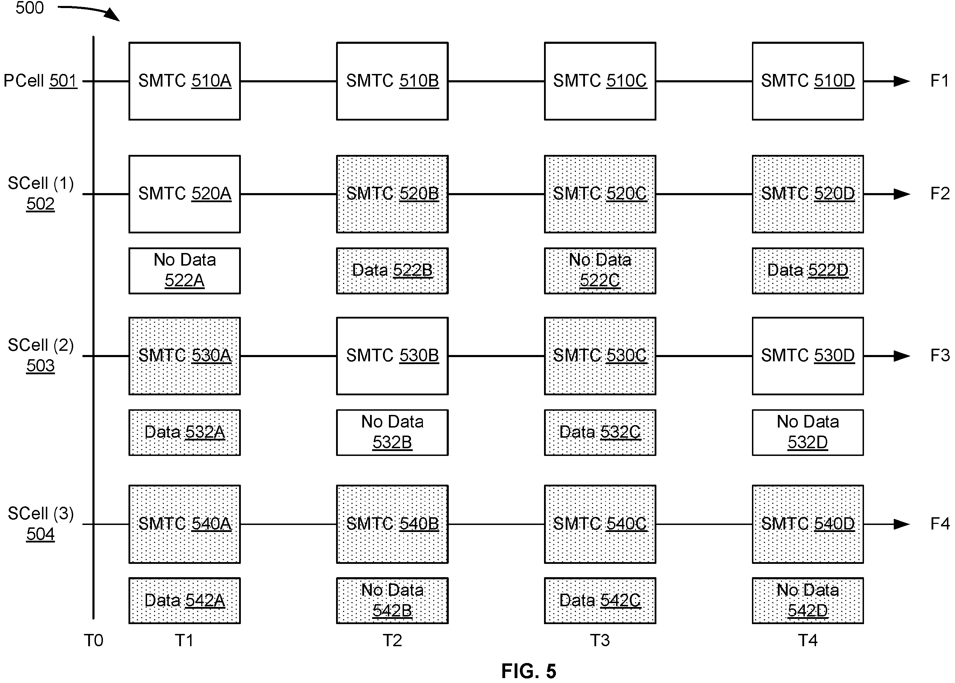

FIG. 5 illustrates another example 500 of simultaneous multi-component carrier measurements and data communications, in accordance with some embodiments. The example 500 is similar to that of FIG. 4, except that a third SCell is configured for a UE. A PCell 501 can use a CC of the configured CCs (having a center frequency F1). Similarly, a first SCell 502 can use a first SCC of the configured CCs (having a center frequency of F2), a second SCell 503 can use a second SCC of the configured CCs (having a center frequency of F3), and a third SCell 504 can use a third SCC of the configured CCs (having a center frequency F4).

For the PCell 501, four SMTC windows are shown and are labeled SMTC 510A, SMTC 510B, SMTC 510C, and SMTC 510D. Similarly, for the first SCell 502, four SMTC windows are shown and are labeled SMTC 520A, SMTC 520B, SMTC 520C, and SMTC 520D. Their timing may be the same as that of the SMTC windows of the PCell 501. Here also, for the second SCell 503, four SMTC windows are shown and are labeled SMTC 530A, SMTC 530B, SMTC 530C, and SMTC 530D. Their timing may be the same as that of the SMTC windows of the PCell 501. For the third SCell 504, four SMTC windows are shown and are labeled SMTC 540A, SMTC 540B, SMTC 540C, and SMTC 540D. Their timing may be the same as that of the SMTC windows of the PCell 501.

The UE implements two searchers, similar to the first searcher 212 and the second searcher 222. On the CC of the PCell 501, a first SSB can be measured during the SMTC 510A, a second a SSB can be measured during the SMTC 510B, a third SSB can be measured during the SMTC 510C, and a fourth SSB can be measured during the SMTC 510D.

In association with the SCCs of the SCells 502-504, a configuration is defined an indicates a particular pattern for a scheduling restriction. The pattern is "(F₂, F₃)" and repeats every three measurement occasions (e.g., "n" and "m" are equal to two and three, respectively). The first measurement object is at "T1" during SMTC 520A, SMTC 530A, and SMTC 540A. Per the pattern, "F2" is restricted and corresponds to the first SCell 502. Accordingly, no data 522A on the first SCC of the first SCell 502 can be communicated during "T1." However, per this pattern, the SCells 503 and 504 are unrestricted. Accordingly, data 532A and data 542A can be communicated during "T1" on SCCs of the SCells 503 and 504.

The second measurement object is at "T2" during SMTC 520B, SMTC 530B, and SMTC 540B. Per the pattern, "F3" is now restricted and corresponds to the second SCell 503. Accordingly, no data 532A on the SCC of the second SCell 503 can be communicated during "T2." However, per this pattern, the SCells 502 and 504 are unrestricted. Accordingly, data 522B and 542B can be communicated during "T2" on SCCs of the SCells 502 and 504.

The third measurement object is at "T3" during SMTC 520C, SMTC 530C, and SMTC 540C. The pattern does not repeat yet (because "m" is equal to three). Accordingly, no scheduling restriction applies to any of the three SCells 502-504. Accordingly, data 522C, 532C, and 542C can be communicated during "T3" on SCCs of the SCells 502-504.

Next, the pattern repeats (after the third measurement occasion since "m" is three). The fourth measurement object is at "T4" during SMTC 520D, SMTC 530D, and SMTC 540D. As repeated, the pattern indicates that "F2" is now restricted. "F2" corresponds to the first SCell 502. Accordingly, no data 522D on the SCC of the first SCell 502 can be communicated during "T4." However, per this pattern, the SCells 503 and 504 are unrestricted. Accordingly, data 532A and data 542A can be communicated during "T4" on SCCs of the SCells 503 and 504.

The above example pattern does not impose scheduling restrictions on the third SCell 504. Accordingly, even if measurement occasions are configured for this SCell 504, the UE can ignore these measurement occasions and instead be scheduled to send and/or receive data.

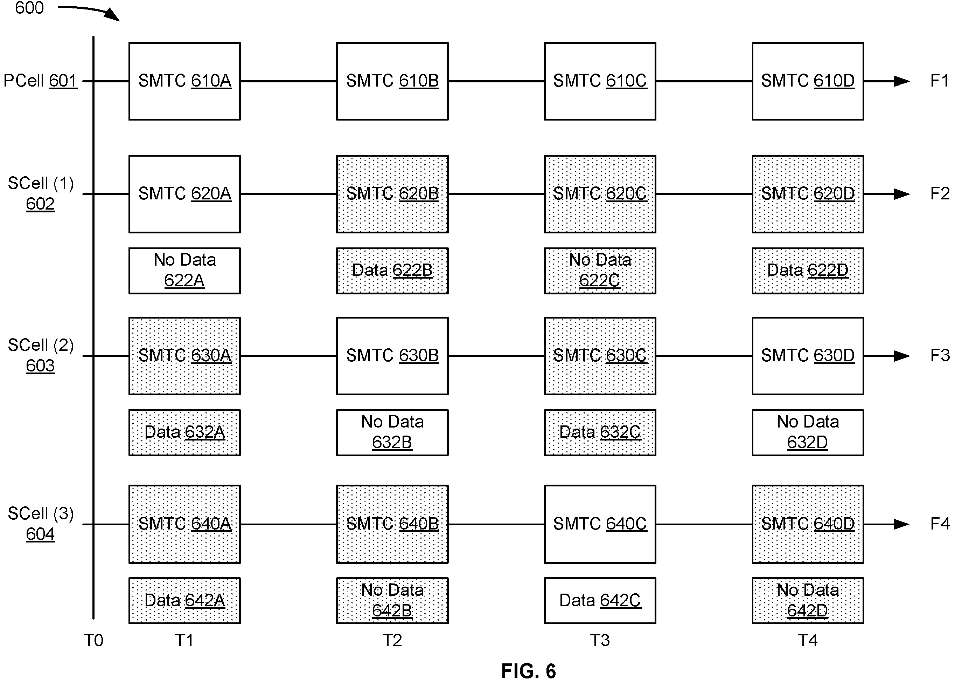

FIG. 6 illustrates yet another example 600 of simultaneous multi-component carrier measurements and data communications, in accordance with some embodiments. The example 600 is similar to that of FIG. 5, except that a different pattern is configured and imposes a scheduling restriction on a third SCell. A PCell 601 can use a CC of the configured CCs (having a center frequency F1). Similarly, a first SCell 602 can use a first SCC of the configured CCs (having a center frequency of F2), a second SCell 603 can use a second SCC of the configured CCs (having a center frequency of F3), and a third SCell 604 can use a third SCC of the configured CCs (having a center frequency F4).

For the PCell 601, four SMTC windows are shown and are labeled SMTC 610A, SMTC 610B, SMTC 610C, and SMTC 610D. Similarly, for the first SCell 602, four SMTC windows are shown and are labeled SMTC 620A, SMTC 620B, SMTC 620C, and SMTC 620D. Their timing may be the same as that of the SMTC windows of the PCell 601. Here also, for the second SCell 603, four SMTC windows are shown and are labeled SMTC 630A, SMTC 630B, SMTC 630C, and SMTC 630D. Their timing may be the same as that of the SMTC windows of the PCell 601. For the third SCell 604, four SMTC windows are shown and are labeled SMTC 640A, SMTC 640B, SMTC 640C, and SMTC 640D. Their timing may be the same as that of the SMTC windows of the PCell 601.

The UE implements two searchers, similar to the first searcher 212 and the second searcher 222. On the CC of the PCell 601, a first SSB can be measured during the SMTC 610A, a second a SSB can be measured during the SMTC 610B, a third SSB can be measured during the SMTC 610C, and a fourth SSB can be measured during the SMTC 610D.

In association with the SCCs of the SCells 602-604, a configuration is defined an indicates a particular pattern for a scheduling restriction. The pattern is "(F₂, F₃,F₄)" and repeats every three measurement occasions (e.g., "n" and "m" are equal to three). The first measurement object is at "T1" during SMTC 620A, SMTC 630A, and SMTC 640A. Per the pattern, "F2" is restricted and corresponds to the first SCell 602. Accordingly, no data 622A on the first SCC of the first SCell 602 can be communicated during "T1." However, per this pattern, the SCells 603 and 604 are unrestricted. Accordingly, data 632A and data 642A can be communicated during "T1" on SCCs of the SCells 603 and 604.

The second measurement object is at "T2" during SMTC 620B, SMTC 630B, and SMTC 640B. Per the pattern, "F3" is now restricted and corresponds to the second SCell 603. Accordingly, no data 632A on the SCC of the second SCell 603 can be communicated during "T2." However, per this pattern, the SCells 602 and 604 are unrestricted. Accordingly, data 622B and 642B can be communicated during "T2" on SCCs of the SCells 602 and 604.

The third measurement object is at "T3" during SMTC 620C, SMTC 630C, and SMTC 640C. Per the pattern, "F4" is now restricted and corresponds to the third SCell 604. Accordingly, no data 642C on the SCC of the third SCell 604 can be communicated during "T3." However, per this pattern, the SCells 602 and 603 are unrestricted. Accordingly, data 622C and 632C can be communicated during "T3" on SCCs of the SCells 602 and 603.

Next, the pattern repeats (after the third measurement occasion since "m" is three). The fourth measurement object is at "T4" during SMTC 620D, SMTC 630D, and SMTC 640D. As repeated, the pattern indicates that "F2" is now restricted. "F2" corresponds to the first SCell 602. Accordingly, no data 622D on the SCC of the first SCell 602 can be communicated during "T4." However, per this pattern, the SCells 603 and 604 are unrestricted. Accordingly, data 632A and data 642A can be communicated during "T4" on SCCs of the SCells 603 and 604.

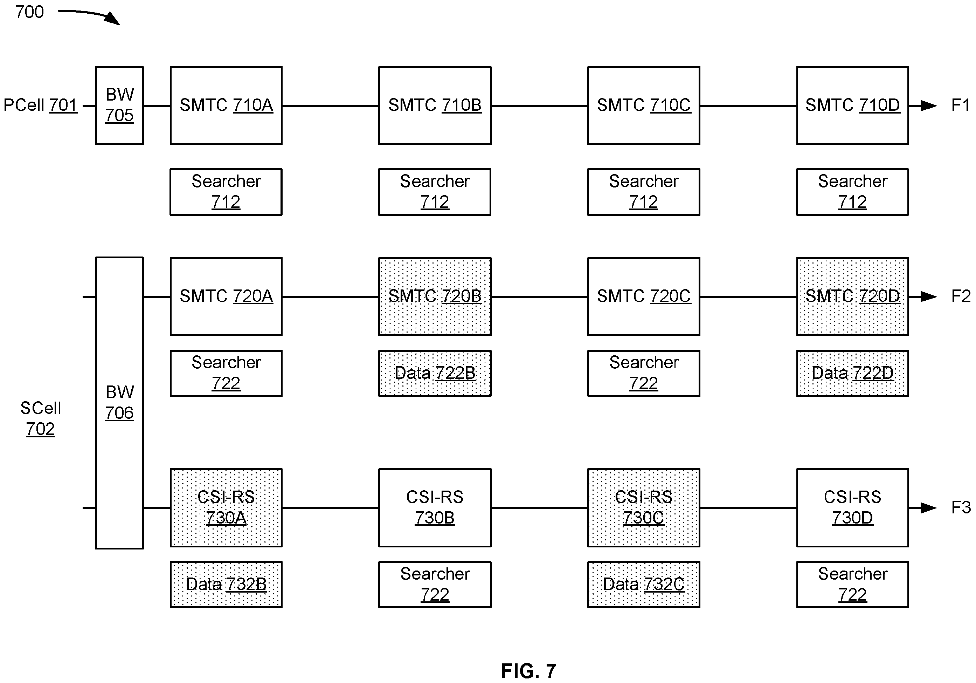

FIG. 7 illustrates an example 700 of simultaneous CSI-RS measurements and data communications, in accordance with some embodiments. In the above figures, use cases of SSB are described. Similarly, a pattern of scheduling restrictions can be applied to use cases of CSI-RS. For example, both SSB and CSI-RS based RRM measurements can be configured on a same SCell. However, SSB may have a different subcarrier spacing than that of PDCCH, PDSCH, and/or CSI-RS. The UE may also not support simultaneousRxDataSSB-DiffNumerology. In such situations, the pattern of scheduling restrictions can be applied to enable data communications simultaneous with performing CSI-RS measurements. The example 700 is provided for illustrative purposes and other examples are possible.

As illustrated, a network configures multiple CCs for a UE in support of CA. A PCell 701 that has a bandwidth (BW) 705 can use a CC of the configured CCs (having a center frequency F1). Similarly, an SCell 702 that has a BW 706 can use a first SCC of the configured CCs (having a center frequency of F2) and a second SCC of the configured CCs (having a center frequency of F3).

For the PCell 701, four SMTC windows are shown and are labeled SMTC 710A, SMTC 710B, SMTC 710C, and SMTC 710D. Similarly, for the first SCC of the SCell 702, four SMTC windows are shown and are labeled SMTC 720A, SMTC 720B, SMTC 720C, and SMTC 720D. Their timing may be the same as that of the SMTC windows of the PCell 701. For the second SCC of the SCell 702, in four different time window, CSI-RS can be scheduled. These time windows are labeled CSI-RS 730A, CSI-RS 730B, CSI-RS 730C, and CSI-RS 730D. Their timing may be the same as that of the SMTC windows of the PCell 701.

The UE implements two searchers 712 and 722, similar to the first searcher 212 and the second searcher 222. On the CC of the PCell 701, a first SSB can be measured during the SMTC 710A, a second a SSB can be measured during the SMTC 710B, a third SSB can be measured during the SMTC 710C, and a fourth SSB can be measured during the SMTC 710D.

On the SCCs, the UE relies on configuration information for scheduling restrictions to determine which SCC to measure during an SMTC window or a CSI-RS window and which SCC can be used for data communication during the SMTC window or the CSI-RS window. In the illustration of FIG. 7, on the first SCC of the SCell 702, a first SSB can be measured during the SMTC 720A and a second a SSB can be measured during the SMTC 720C. On the second SCC of the SCell 702, a first CSI-RS can be measured during the CSI-RS window 730B and a second a CSI-RS can be measured during the CSI-RS window 730D.

Accordingly, the second searcher 722 searches the first SCC of the SCell 702 during the SMTC 720A and no data can be sent during that time on the first SCC. The configuration information indicates that the second SCC of the SCell 702 is unrestricted during the CSI-RS window 730A. As such, data 732A can be sent on the second SCC during the CSI-RS windonw 730A, resulting in a possible throughput increase.

Next, the second searcher 722 searches the second SCC of the SCell 702 during the CSI-RS window 730B and no data can be sent during that time on the second SCC. The configuration information indicates that the first SCC of the SCell 702 is unrestricted during the SMTC 720B. As such, data 722B can be sent on the first SCC during the SMTC 720B, resulting in a possible throughput increase.

This throughput increase continues. Particularly, the second searcher 722 searches the first SCC of the SCell 702 during the next SMTC 720C and no data can be sent during that time on the first SCC. The configuration information indicates that the second SCC of the SCell 702 is unrestricted during the next CSI-RS window 730C. As such, data 732C can be sent on the second SCC during the next CSI-RS window 730C, resulting in a possible throughput increase.

Similarly, the second searcher 722 searches the second SCC of the SCell 702 during the next CSI-RS window 730D and no data can be sent during that time on the second SCC. The configuration information indicates that the first SCC of the SCell 702 is unrestricted during the SMTC 720D. As such, data 722D can be sent on the first SCC during the SMTC 720D, resulting in a possible throughput increase.

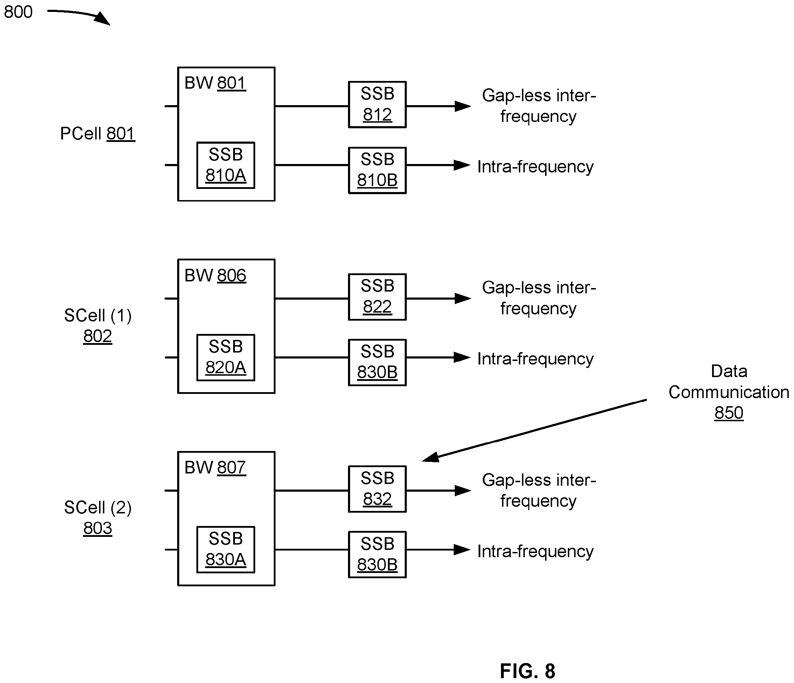

FIG. 8 illustrates an example 800 of simultaneous gap-less inter-frequency measurements and data communications, in accordance with some embodiments. In the above figures, use cases of intra-frequency measurements are described. Similarly, a pattern of scheduling restrictions can be applied to use cases of inter-frequency measurements, including gap-less inter-frequency measurements. A gap-less inter-frequency measurement generally refers to an inter-frequency measurement that does not involve a measurement example. For example, reference signal based RRM measurements (such as ones using SSB and/or CSI-RS) can be configured, whereby at least some of these measurements are gap-less inter-frequency measurements. A pattern of scheduling restrictions can be applied to enable data communications simultaneous with performing the gap-less inter-frequency measurements. The example 800 is provided for illustrative purposes and other examples are possible.

As illustrated, a network configures multiple CCs for a UE in support of CA. A PCell 801 that has a bandwidth (BW) 805 can use a first CC and a second CC of the configured CCs. SSB 812 can be sent on the first CC. SSB 810A and SSB 810B can be sent on the second CC. Measurement of the SSB 812 can be a gap-less inter-frequency measurement, whereas measurements of SSB 810A and 810B are intra-frequency measurements. Similarly, a first SCell 802 that has a BW 806 can use a first SCC and a second SCC of the configured CCs. SSB 822 can be sent on the first SCC. SSB 820A and SSB 820B can be sent on the second SCC. Measurement of the SSB 832 can be a gap-less inter-frequency measurement, whereas measurements of SSB 820A and 820B are intra-frequency measurements. A second SCell 803 that has a BW 807 can use a third SCC and a fourth SCC of the configured CCs. SSB 832 can be sent on the third SCC. SSB 830A and SSB 830B can be sent on the fourth SCC. Measurement of the SSB 832 can be a gap-less inter-frequency measurement, whereas measurements of SSB 830A and 830B are intra-frequency measurements.

Assume that the SSB 812 on the first CC and SSB 822 on the first SCC are measured. The measurements are gap-less inter-frequency measurements. A scheduling restriction can be defined (e.g., in a similar manner using the pattern described herein above). Per this scheduling restriction, the second SCell 803 is unrestricted during gap-less inter-frequency measurements. Accordingly, data communication 850 can occur on at least the third SCC.

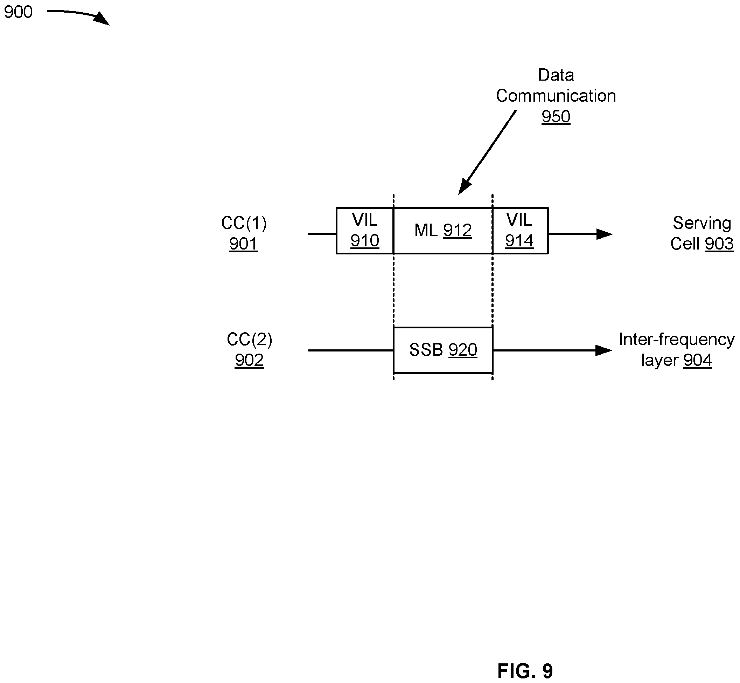

FIG. 9 illustrates an example 900 of simultaneous network controlled small gap (NCSG) and data communications, in accordance with some embodiments. Generally, an NCSG can be a short measurement gap defined in a technical specification with which a UE complies. For example, the NCSG can be formed by at least a first visible interruption length (VIL) 910, a measurement length (ML) 912, and a second VIL 930. The time lengths of these components can be predefined or configured by a network. The first VIL 910 is provided due to the fact that UE needs time to configure an additional RF chain for measurement. During the first VIL 910, the UE is not expected to transmit or receive any data on corresponding serving cells. During the ML 912, the UE may be expected to transmit and receive data on the corresponding serving carrier. The second VIL 930 is the visible interruption length after measurement. The second VIL 930 is provided due to the fact that the UE needs to switch off the spare RF chain after measurement. During the second VIL 930, the UE is not expected to transmit or receive any date on corresponding serving cells. The NCGS can repeat according to a particular periodicity.

An NCSG can be scheduled on a first CC 901 of a serving cell 903. In comparison, an SSB 920 can be scheduled on a second CC 902 corresponding to an inter-frequency layer 904. The measurement time period of the SSB 920 can be the same as the ML 912. A scheduling restriction can be defined (e.g., in a similar manner using the pattern described herein above). Per this scheduling restriction, the second SCell 903 is unrestricted during the ML 912. Accordingly, the data communication 950 can occur on the first CC 901 during the ML 912.

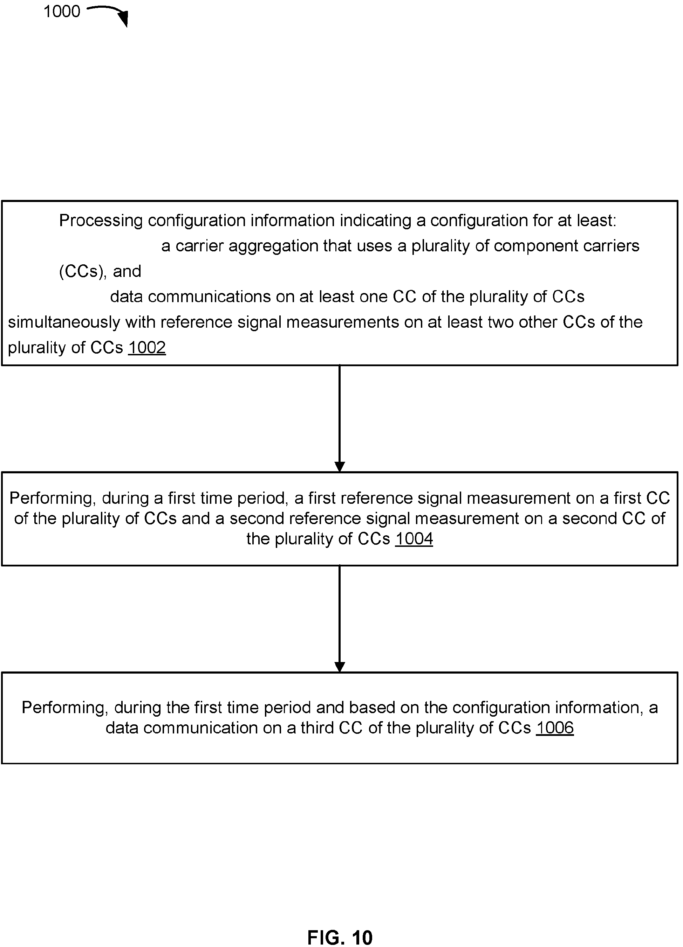

FIG. 10 illustrates an example of an operational flow/algorithmic structure 1000 for simultaneous multi-component carrier measurements and data communications, in accordance with some embodiments. The operational flow/algorithmic structure 1000 can be implemented by a UE (e.g., performed by components thereof including, for example, processors of the UE). The UE can be any of the UEs described herein. In some embodiments, the operational flow/algorithmic structure 1000 may be implemented by executing instructions stored in a tangible, non-transitory, computer-readable storage medium, such as a memory of the UE. While the operational flow/algorithmic structure 1000 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1000 includes, at 1002, processing configuration information indicating a configuration for at least: a carrier aggregation that uses a plurality of component carriers (CCs), and data communications on at least one CC of the plurality of CCs simultaneously with reference signal measurements on at least two other CCs of the plurality of CCs. For example, the configuration information can configure the UE for CA and can indicate measurement objects and a pattern scheduling restriction. The reference signal measurements can be intra-frequency measurements and/or gap-less inter-frequency measurements on SSBs and/or CSI-RS.

In an example, the operational flow/algorithmic structure 1000 includes, at 1004, performing, during a first time period, a first reference signal measurement on a first CC of the plurality of CCs and a second reference signal measurement on a second CC of the plurality of CCs. For example, the first CC can be that of a PCell, whereas the second CC can be an SCC of a first SCell. The time period can be a measurement time period (e.g., an SMTC window and/or a CSI-RS window).

In an example, the operational flow/algorithmic structure 1000 includes, at 1006, performing, during the first time period and based on the configuration information, a data communication on a third CC of the plurality of CCs. The data communication can be an uplink data transmission and/or downlink data reception. The third CC can be an SCC of a second SCell. The UE can determine, based on the scheduling restriction pattern, that no scheduling restriction applies to this SCC during the first time period. Accordingly, the UE can be scheduled the uplink data transmission and/or downlink data reception.

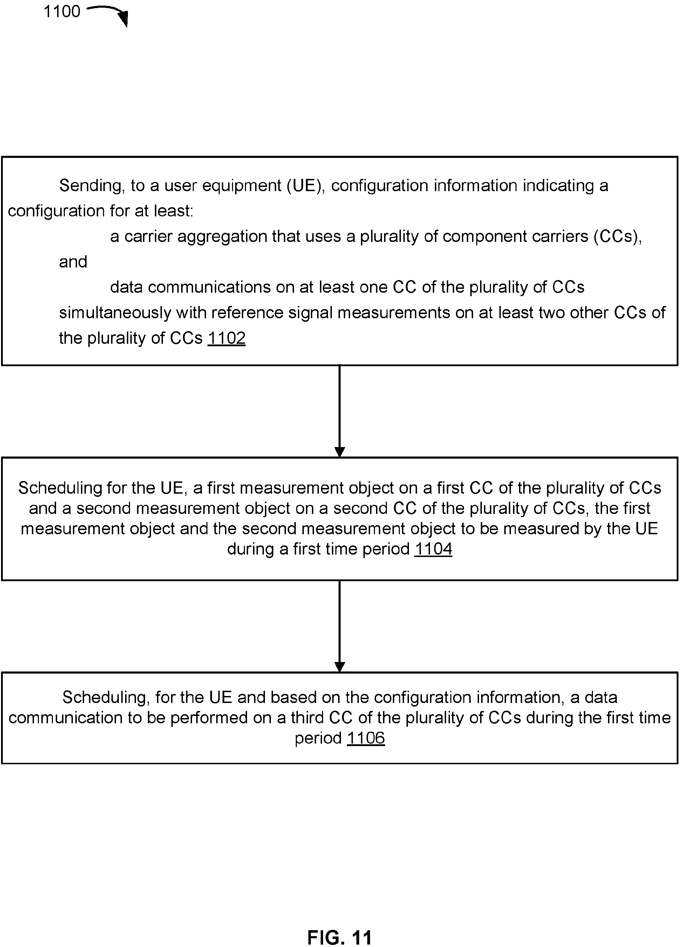

FIG. 11 illustrates another example of an operational flow/algorithmic structure 1100 for simultaneous multi-component carrier measurements and data communications, in accordance with some embodiments. The operational flow/algorithmic structure 1100 can be implemented by a network (e.g., by a base station thereof and/or processors of the base station). The network can be any of the networks described herein. In some embodiments, the operational flow/algorithmic structure 1100 may be implemented by executing instructions stored in a tangible, non-transitory, computer-readable storage medium, such as a memory of the base station. While the operational flow/algorithmic structure 1100 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1100 includes, at 1102, sending, to a user equipment (UE), configuration information indicating a configuration for at least: a carrier aggregation that uses a plurality of component carriers (CCs), and data communications on at least one CC of the plurality of CCs simultaneously with reference signal measurements on at least two other CCs of the plurality of CCs. For example, the configuration information can configure the UE for CA and can indicate measurement objects and a pattern scheduling restriction. The reference signal measurements can be intra-frequency measurements and/or gap-less inter-frequency measurements on SSBs and/or CSI-RS. The configuration information can be based on UE capability information. In particular, the network can receive, from the UE, the UE capability information indication a support by the UE for the data communication simultaneously with the reference signal measurements. The support is indicated per frequency range (FR). The configuration information can be sent based on the UR capability information.

In an example, the operational flow/algorithmic structure 1100 includes, at 1104, scheduling for the UE, a first measurement object on a first CC of the plurality of CCs and a second measurement object on a second CC of the plurality of CCs, the first measurement object and the second measurement object to be measured by the UE during a first time period. For example, the first CC can be that of a PCell, whereas the second CC can be an SCC of a first SCell. The time period can be a measurement time period (e.g., an SMTC window and/or a CSI-RS window).

In an example, the operational flow/algorithmic structure 1100 includes, at 1106, scheduling, for the UE and based on the configuration information, a data communication to be performed on a third CC of the plurality of CCs during the first time period. The data communication can be an uplink data transmission and/or downlink data reception. The third CC can be an SCC of a second SCell. The network can determine, based on the scheduling restriction pattern, that no scheduling restriction applies to this SCC during the first time period. Accordingly, the network can schedule the uplink data transmission and/or downlink data reception.

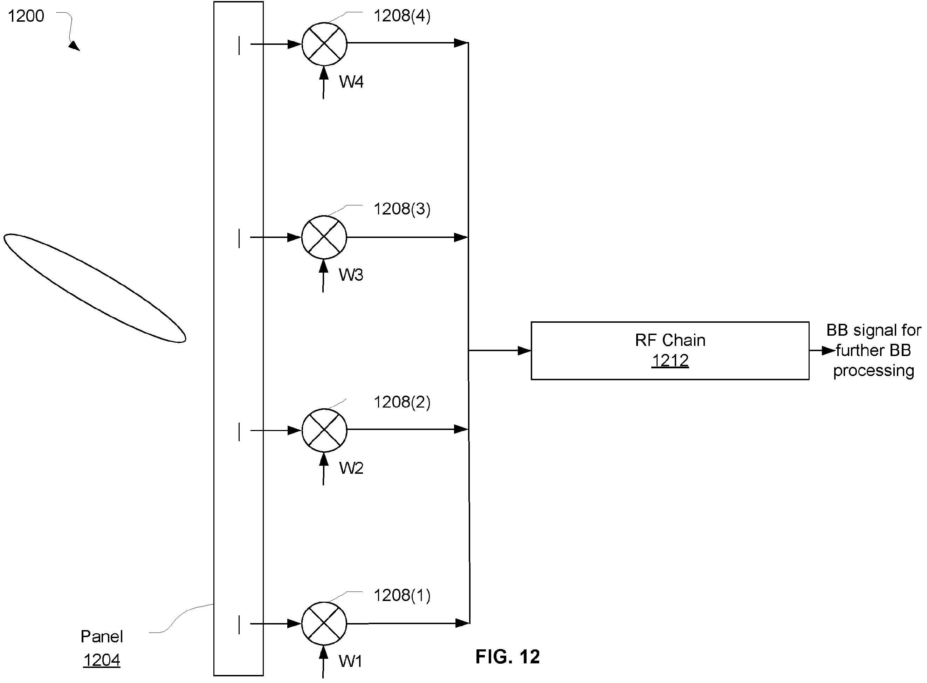

FIG. 12 illustrates receive components 1200 of the UE 104, in accordance with some embodiments. The receive components 1200 may include an antenna panel 1204 that includes a number of antenna elements. The panel 1204 is shown with four antenna elements, but other embodiments may include other numbers.

The antenna panel 1204 may be coupled to analog beamforming (BF) components that include a number of phase shifters 1208(1)-1208(4). The phase shifters 1208(1)-1208(4) may be coupled with a radio-frequency (RF) chain 1212. The RF chain 1212 may amplify a receive analog RF signal, downconvert the RF signal to baseband, and convert the analog baseband signal to a digital baseband signal that may be provided to a baseband processor for further processing.

In various embodiments, control circuitry, which may reside in a baseband processor, may provide BF weights (for example W1 - W4), which may represent phase shift values, to the phase shifters 1208(1)-1208(4) to provide a receive beam at the antenna panel 1204. These BF weights may be determined based on the channel-based beamforming.

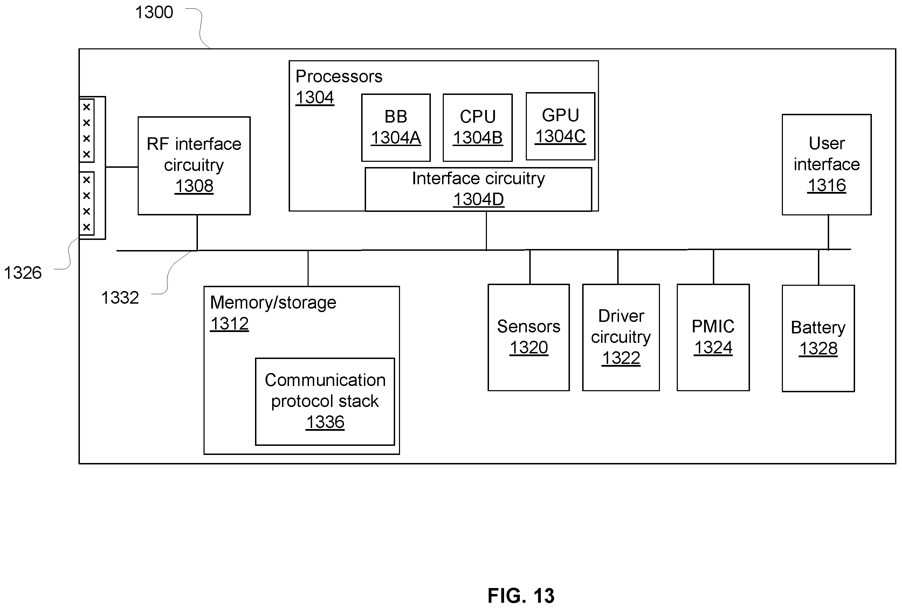

FIG. 13 illustrates a UE 1300, in accordance with some embodiments. The UE 1300 may be similar to and substantially interchangeable with UE 104 of FIG. 1. Particularly, the UE 1300 can receive and store configuration information that indicates a scheduling restriction pattern. Based on this pattern, the UE can determine, during a measurement time period (e.g., SMTC), whether a scheduling restriction applies to a CC or not. If the scheduling restriction applies, the UE can perform a measurement during the measurement time period on a reference signal received on the CC. Otherwise, the UE can be scheduled to transmit and/or receive data on the CC during the measurement time period.

Similar to that described above with respect to UE 104, the UE 1300 may be any mobile or non-mobile computing device, such as mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, or relaxed-IoT devices. In some embodiments, the UE may be a reduced capacity UE or NR-Light UE.

The UE 1300 may include processors 1304, RF interface circuitry 1308, memory/storage 1312, user interface 1316, sensors 1320, driver circuitry 1322, power management integrated circuit (PMIC) 1324, and battery 1328. The components of the UE 1300 may be implemented as integrated circuits (ICs), portions thereof, discrete electronic devices, or other modules, logic, hardware, software, firmware, or a combination thereof. The block diagram of FIG. 13 is intended to show a high-level view of some of the components of the UE 1300. However, some of the components shown may be omitted, additional components may be present, and different arrangements of the components shown may occur in other implementations.

The components of the UE 1300 may be coupled with various other components over one or more interconnects 1332, which may represent any type of interface, input/output, bus (local, system, or expansion), transmission line, trace, optical connection, etc. that allows various circuit components (on common or different chips or chipsets) to interact with one another.

The processors 1304 may include processor circuitry, such as baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage 1312 to cause the UE 1300 to perform operations as described herein.

In some embodiments, the baseband processor circuitry 1304A may access a communication protocol stack 1336 in the memory/storage 1312 to communicate over a 3GPP compatible network. In general, the baseband processor circuitry 1304A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1308.

The baseband processor circuitry 1304A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The baseband processor circuitry 1304A may also access group information from memory/storage 1312 to determine search space groups in which a number of repetitions of a PDCCH may be transmitted.

The memory/storage 1312 may include any type of volatile or non-volatile memory that may be distributed throughout the UE 1300. In some embodiments, some of the memory/storage 1312 may be located on the processors 1304 themselves (for example, L1 and L2 cache), while other memory/storage 1312 is external to the processors 1304 but accessible thereto via a memory interface. The memory/storage 1312 may include any suitable volatile or non-volatile memory, such as, but not limited to, dynamic random-access memory (DRAM), static random-access memory (SRAM), erasable programmable read-only memory (EPROM), electrically erasable programmable read-only memory (EEPROM), Flash memory, solid-state memory, or any other type of memory device technology.

The RF interface circuitry 1308 may include transceiver circuitry and a radio frequency front module (RFEM) that allows the UE 1300 to communicate with other devices over a radio access network. The RF interface circuitry 1308 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1350 and proceed to filter and amplify (with a low-noise amplifier) the signal. The signal may be provided to a receiver of the transceiver that down-converts the RF signal into a baseband signal that is provided to the baseband processor of the processors 1304.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1350.

In various embodiments, the RF interface circuitry 1308 may be configured to transmit/receive signals in a manner compatible with NR access technologies.

The antenna 1350 may include a number of antenna elements that each convert electrical signals into radio waves to travel through the air and to convert received radio waves into electrical signals. The antenna elements may be arranged into one or more antenna panels. The antenna 1350 may have antenna panels that are omnidirectional, directional, or a combination thereof to enable beamforming and multiple input, multiple output communications. The antenna 1350 may include microstrip antennas, printed antennas fabricated on the surface of one or more printed circuit boards, patch antennas, phased array antennas, etc. The antenna 1350 may have one or more panels designed for specific frequency bands including bands in FR1 or FR2.

The user interface circuitry 1316 includes various input/output (I/O) devices designed to enable user interaction with the UE 1300. The user interface 1316 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators, such as light emitting diodes (LEDs) and multi-character visual outputs, or more complex outputs, such as display devices or touchscreens (for example, liquid crystal displays (LCDs), LED displays, quantum dot displays, projectors, etc.), with the output of characters, graphics, multimedia objects, and the like being generated or produced from the operation of the UE 1300.

The sensors 1320 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1322 may include software and hardware elements that operate to control particular devices that are embedded in the UE 1300, attached to the UE 1300, or otherwise communicatively coupled with the UE 1300. The driver circuitry 1322 may include individual drivers allowing other components to interact with or control various input/output (I/O) devices that may be present within, or connected to, the UE 1300. For example, driver circuitry 1322 may include a display driver to control and allow access to a display device, a touchscreen driver to control and allow access to a touchscreen interface, sensor drivers to obtain sensor readings of sensor circuitry 1320 and control and allow access to sensor circuitry 1320, drivers to obtain actuator positions of electro-mechanic components or control and allow access to the electro-mechanic components, a camera driver to control and allow access to an embedded image capture device, audio drivers to control and allow access to one or more audio devices.

The PMIC 1324 may manage power provided to various components of the UE 1300. In particular, with respect to the processors 1304, the PMIC 1324 may control power-source selection, voltage scaling, battery charging, or DC-to-DC conversion.

In some embodiments, the PMIC 1324 may control, or otherwise be part of, various power saving mechanisms of the UE 1300. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1300 may power down for brief intervals of time and thus save power. If there is no data traffic activity for an extended period of time, then the UE 1300 may transition off to an RRC_Idle state, where it disconnects from the network and does not perform operations, such as channel quality feedback, handover, etc. The UE 1300 goes into a very low power state and it performs paging where again it periodically wakes up to listen to the network and then powers down again. The UE 1300 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1328 may power the UE 1300, although in some examples the UE 1300 may be mounted deployed in a fixed location and may have a power supply coupled to an electrical grid. The battery 1328 may be a lithium-ion battery, a metal-air battery, such as a zinc-air battery, an aluminum-air battery, a lithium-air battery, and the like. In some implementations, such as in vehicle-based applications, the battery 1328 may be a typical lead-acid automotive battery.

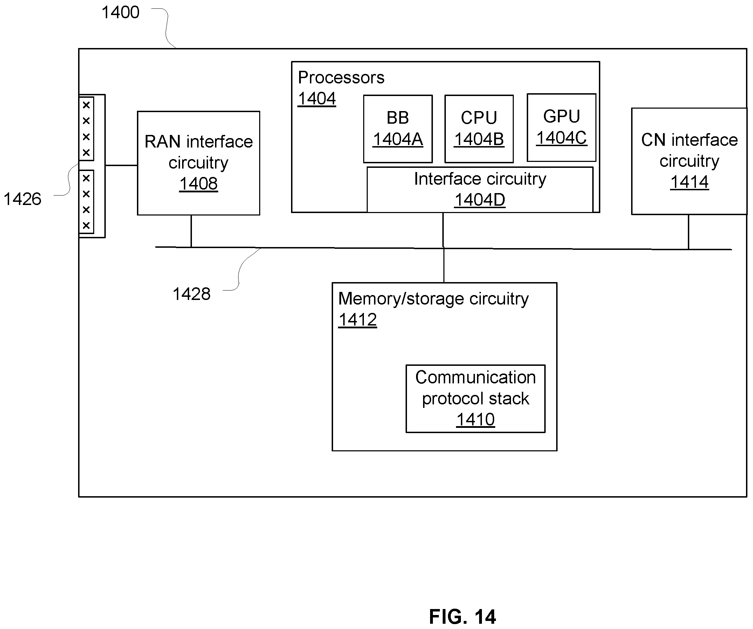

FIG. 14 illustrates a gNB 1400, in accordance with some embodiments. The gNB 1400 may be similar to and substantially interchangeable with the gNB 108 of FIG. 1. Particularly, the gNB 1400 can send, to a UE, configuration information that indicates a scheduling restriction pattern. This pattern can indicate whether a scheduling restriction applies to a CC or not during a measurement time period (e.g., SMTC). If the scheduling restriction applies, the gNB 1400 can expect the UE to perform a measurement during the measurement time period on a reference signal received on the CC. Otherwise, the gNB 1400 can schedule a data transmission and/or a data reception on the CC during the measurement time period..

The gNB 1400 may include processors 1404, RAN interface circuitry 1408, core network (CN) interface circuitry 1412, and memory/storage circuitry 1416.

The components of the gNB 1400 may be coupled with various other components over one or more interconnects 1428.

The processors 1404, RAN interface circuitry 1408, memory/storage circuitry 1416 (including communication protocol stack 1410), antenna 1450, and interconnects 1428 may be similar to like-named elements shown and described with respect to FIG. 13.

The CN interface circuitry 1412 may provide connectivity to a core network, for example, a Fifth Generation Core network (5GC) using a 5GC-compatible network interface protocol, such as carrier Ethernet protocols, or some other suitable protocol. Network connectivity may be provided to/from the gNB 1400 via a fiber optic or wireless backhaul. The CN interface circuitry 1412 may include one or more dedicated processors or FPGAs to communicate using one or more of the aforementioned protocols. In some implementations, the CN interface circuitry 1412 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method, the method comprising: processing configuration information indicating a configuration for at least: a carrier aggregation that uses a plurality of component carriers (CCs), and data communications on at least one CC of the plurality of CCs simultaneously with reference signal measurements on at least two other CCs of the plurality of CCs; performing, during a first time period, a first reference signal measurement on a first CC of the plurality of CCs and a second reference signal measurement on a second CC of the plurality of CCs; and performing, during the first time period and based on the configuration information, a data communication on a third CC of the plurality of CCs.

Example 2 includes a method, the method comprising: sending, to a user equipment (UE), configuration information indicating a configuration for at least: a carrier aggregation that uses a plurality of component carriers (CCs), and data communications on at least one CC of the plurality of CCs simultaneously with reference signal measurements on at least two other CCs of the plurality of CCs; scheduling for the UE, a first measurement object on a first CC of the plurality of CCs and a second measurement object on a second CC of the plurality of CCs, the first measurement object and the second measurement object to be measured by the UE during a first time period; and scheduling, for the UE and based on the configuration information, a data communication to be performed on a third CC of the plurality of CCs during the first time period.

Example 3 includes the method of any preceding example 1-2, wherein the configuration information further configures a first measurement object on the first CC, a second measurement object on the second CC, and a third measurement object on the third CC, wherein the first reference signal measurement is performed based on the first measurement object, wherein the second reference signal measurement is performed based on the second measurement object, and wherein the data communication is performed instead of a third reference signal measurement and during the first time period in which the third measurement object is scheduled.

Example 4 includes the method of any preceding example 1-3, wherein the data communication is a third data communication, wherein the configuration information indicates a scheduling restriction, and wherein the method further comprises: determining, or indicating in signaling to the UE, that the scheduling restriction restricts a first data communication on the first CC during the first time period and a second data communication on the second CC during the first time period and allows the third data communication on the third CC during the first time period.

Example 5 includes the method of example 4, further comprising: determining, or indicating in the signaling to the UE, that the scheduling restriction restricts a fourth data communication on the first CC during a second time period and a fifth data communication on the third CC during the second time period and allows a sixth data communication on the second CC during the second time period; performing, or causing performance of, during the first time period, a third reference signal measurement on the first CC and a fourth reference signal measurement on the third CC; and performing, or causing performance of, during the second time period, the sixth data communication on the second CC.

Example 6 includes the method of any preceding example 1-4, wherein the configuration information indicates a pattern of applying a scheduling restriction to the plurality of CCs over time, wherein the method further comprises: determining, or indicating in signaling to the UE, whether the scheduling restriction is applied to a CC of the plurality of CCs during a time period, wherein the scheduling restriction being applied to the CC indicates that the CC is unusable for communicating data during the time period, and wherein the scheduling restriction being unapplied to the CC indicates that the CC is usable for communication the data during the time period.

Example 7 includes the method of example 6, wherein the scheduling restriction includes a scheduling restriction window, wherein the pattern indicates whether the scheduling restriction window applies to the CC, wherein a measurement object is scheduled during the scheduling restriction window, and wherein data reception and/or transmission is scheduled outside of the scheduling restriction window.

Example 8 includes the method of any preceding example 6-7, wherein the configuration information indicates the pattern by indicating whether a measurement object configured on the CC is to be measured or not.

Example 9 includes the method of any preceding example 6-8, wherein the configuration information indicates a repetition of the pattern after a number of measurement occasions.

Example 10 includes the method of any preceding example 6-9, wherein the configuration information indicates a bitmap string "(Fᵢ, Fᵢ₊₁, ..., Fᵢ₊ₙ)," wherein "Fᵢ" corresponds to an i^{th} measurement object and represents at least one of: a cell identifier, a physical cell identifier, a measurement object identifier, or an absolute radio frequency channel number, and wherein "n" represents a total number of measurement objects to which the scheduling restriction applies at any time.

Example 11 includes the method of any preceding example 1-10, wherein the first reference signal measurement and the second reference signal measurement are intra-frequency measurements or gap-less inter-frequency measurements on corresponding reference signals.

Example 12 includes the method of example 11, wherein the corresponding reference signals include a synchronization signal block (SSB) scheduled for a user equipment (UE), wherein the SSB has a different subcarrier spacing than a physical downlink control data channel or a physical downlink shared channel used for the data communication, and wherein the UE lacks supporting simultaneous data reception and SSB reception that use different numerologies.

Example 13 includes the method of example 11, wherein the corresponding reference signals include a channel state information reference signal (CSI-RS) scheduled for a user equipment (UE), wherein the CSI-RS has a different subcarrier spacing than a synchronization signal block (SSB), and wherein the UE lacks supporting simultaneous data reception and SSB reception that use different numerologies.

Example 14 includes the method of any preceding example 1-13, wherein the data communication occurs during a measurement length (ML) within a network controlled small gap (NCSG) that includes at least two visible interruption lengths (VILs).

Example 15 includes the method of any preceding example 1-14, further comprising: receiving, from the UE, or, sending, to a network, capability information indicating a support by the UE for the data communication simultaneously with the reference signal measurements, wherein the configuration information is sent based on the capability information.

Example 16 includes the method of example 15, wherein the support is indicated per frequency range (FR).

Example 17 includes the method of any preceding example 1-16, wherein the configuration information indicates a pattern of applying a scheduling restriction to the plurality of CCs over time, wherein the scheduling restriction being applied to a CC during a time period indicates that the CC is unusable for communicating data during the time period.

Example 18 includes the method of any preceding example 1-17, wherein the configuration information indicates a pattern for a scheduling restriction window, wherein the pattern indicates whether the scheduling restriction window applies to a CC of the plurality of component carriers, wherein a measurement object is scheduled during the scheduling restriction window, and wherein data reception and/or transmission is scheduled outside of the scheduling restriction window.

Example 19 includes the method of any preceding example 1-18, wherein the configuration indicates a bitmap string "(Fᵢ, Fᵢ₊₁, ..., Fᵢ₊ₙ)," wherein "Fᵢ" corresponds to an i^{th} measurement object and represents at least one of: a cell identifier, a physical cell identifier, a measurement object identifier, or an absolute radio frequency channel number, and wherein "n" represents a total number of measurement objects to which a scheduling restriction applies at any time.

Example 20 includes a user equipment (UE) or an apparatus comprising: one or more processors; and one or more memory storing instructions that, upon execution by the one or more processors, configure the UE or the apparatus to perform a method described in or related to any of the preceding examples.

Example 21 includes one or more computer-readable media storing instructions that, when executed on a user equipment (UE) or an apparatus, cause the UE or the apparatus to perform operations comprising those of a method described in or related to any of the preceding examples.

Example 22 includes an apparatus comprising means to perform one or more elements of a method described in or related to any of the preceding examples.

Example 23 includes one or more non-transitory computer-readable media comprising instructions to cause an apparatus, upon execution of the instructions by one or more processors of the apparatus, to perform one or more elements of a method described in or related to any of the preceding examples.

Example 24 includes an apparatus comprising logic, modules, or processing circuitry configured to perform one or more elements of a method described in or related to any of the preceding examples.

Example 25 includes an apparatus, a network, a base station, or a system comprising: one or more processors and one or more computer-readable media comprising instructions that, when executed by the one or more processors, cause the one or more processors to perform one or more elements of a method described in or related to any of the preceding examples.

Example 26 includes an apparatus comprising: a receiver; a transmitter; and processing circuitry communicatively couple with the receiver and the transmitter and configured to: process configuration information indicating a configuration for at least: a carrier aggregation that uses a plurality of component carriers (CCs), and data communications on at least one CC of the plurality of CCs simultaneously with reference signal measurements on at least two other CCs of the plurality of CCs; perform, during a first time period, a first reference signal measurement on a first CC of the plurality of CCs and a second reference signal measurement on a second CC of the plurality of CCs; and perform, during the first time period and based on the configuration information, a data communication on a third CC of the plurality of CCs.

Example 27 includes the apparatus of Example 26, wherein the first reference signal measurement and the second reference signal measurement are intra-frequency measurements or gap-less inter-frequency measurements on corresponding reference signals.

Example 28 includes the apparatus of Example 27, wherein the corresponding reference signals include a synchronization signal block (SSB) scheduled for a user equipment (UE), wherein the SSB has a different subcarrier spacing than a physical downlink control data channel or a physical downlink shared channel used for the data communication, and wherein the UE lacks supporting simultaneous data reception and SSB reception that use different numerologies.

Example 29 includes the apparatus of Example 27, wherein the corresponding reference signals include a channel state information reference signal (CSI-RS) scheduled for a user equipment (UE), wherein the CSI-RS has a different subcarrier spacing than a synchronization signal block (SSB), and wherein the UE lacks supporting simultaneous data reception and SSB reception that use different numerologies.

Example 30 includes the apparatus of Example 26, wherein the data communication occurs during a measurement length (ML) within a network controlled small gap (NCSG) that includes at least two visible interruption lengths (VILs).

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
processing configuration information indicating a configuration for at least:
a carrier aggregation that uses a plurality of component carriers (CCs), and
data communications on at least one CC of the plurality of CCs simultaneously with reference signal measurements on at least two other CCs of the plurality of CCs;
performing, during a first time period, a first reference signal measurement on a first CC of the plurality of CCs and a second reference signal measurement on a second CC of the plurality of CCs; and
performing, during the first time period and based on the configuration information, a data communication on a third CC of the plurality of CCs.

2. The method of claim 1, wherein the configuration information further configures a first measurement object on the first CC, a second measurement object on the second CC, and a third measurement object on the third CC, wherein the first reference signal measurement is performed based on the first measurement object, wherein the second reference signal measurement is performed based on the second measurement object, and wherein the data communication is performed instead of a third reference signal measurement and during the first time period in which the third measurement object is scheduled.

3. The method of claim 1 or 2, wherein the data communication is a third data communication, wherein the configuration information indicates a scheduling restriction, and wherein the method further comprises:
determining that the scheduling restriction restricts a first data communication on the first CC during the first time period and a second data communication on the second CC during the first time period and allows the third data communication on the third CC during the first time period.

4. The method of any of claims 1-3, wherein the configuration information indicates a pattern of applying a scheduling restriction to the plurality of CCs over time, wherein the method further comprises:
determining whether the scheduling restriction is applied to a CC of the plurality of CCs during a time period, wherein the scheduling restriction being applied to the CC indicates that the CC is unusable for communicating data during the time period, and wherein the scheduling restriction being unapplied to the CC indicates that the CC is usable for communication the data during the time period.

5. The method of claim 4, wherein the scheduling restriction includes a scheduling restriction window, wherein the pattern indicates whether the scheduling restriction window applies to the CC, wherein a measurement object is scheduled during the scheduling restriction window, and wherein data reception and/or transmission is scheduled outside of the scheduling restriction window.

6. The method of claim 4 or 5, wherein the configuration information indicates at least one of: (i) the pattern by indicating whether a measurement object configured on the CC is to be measured or not, or (ii) a repetition of the pattern after a number of measurement occasions.

7. An apparatus comprising:
a receiver;
a transmitter; and
processing circuitry communicatively coupled with the receiver and the transmitter and configured to:
process configuration information indicating a configuration for at least:
a carrier aggregation that uses a plurality of component carriers (CCs), and
data communications on at least one CC of the plurality of CCs simultaneously with reference signal measurements on at least two other CCs of the plurality of CCs;
perform, during a first time period, a first reference signal measurement on a first CC of the plurality of CCs and a second reference signal measurement on a second CC of the plurality of CCs; and
perform, during the first time period and based on the configuration information, a data communication on a third CC of the plurality of CCs.

8. The apparatus of claim 7, wherein the first reference signal measurement and the second reference signal measurement are intra-frequency measurements or gap-less inter-frequency measurements on corresponding reference signals.

9. The apparatus of claim 8, wherein the corresponding reference signals include a synchronization signal block (SSB) scheduled for a user equipment (UE), wherein the SSB has a different subcarrier spacing than a physical downlink control data channel or a physical downlink shared channel used for the data communication, and wherein the UE lacks supporting simultaneous data reception and SSB reception that use different numerologies.

10. The apparatus of claim 8, wherein the corresponding reference signals include a channel state information reference signal (CSI-RS) scheduled for a user equipment (UE), wherein the CSI-RS has a different subcarrier spacing than a synchronization signal block (SSB), and wherein the UE lacks supporting simultaneous data reception and SSB reception that use different numerologies.

11. The apparatus of any of claims 7-10, wherein the data communication occurs during a measurement length (ML) within a network controlled small gap (NCSG) that includes at least two visible interruption lengths (VILs).

12. A method comprising:
sending, to a user equipment (UE), configuration information indicating a configuration for at least:
a carrier aggregation that uses a plurality of component carriers (CCs), and
data communications on at least one CC of the plurality of CCs simultaneously with reference signal measurements on at least two other CCs of the plurality of CCs;
scheduling for the UE, a first measurement object on a first CC of the plurality of CCs and a second measurement object on a second CC of the plurality of CCs, the first measurement object and the second measurement object to be measured by the UE during a first time period; and
scheduling, for the UE and based on the configuration information, a data communication to be performed on a third CC of the plurality of CCs during the first time period.

13. The method of claim 12, wherein the configuration information indicates a pattern of applying a scheduling restriction to the plurality of CCs over time, wherein the scheduling restriction being applied to a CC during a time period indicates that the CC is unusable for communicating data during the time period.

14. The method of claim 12 or 13, wherein the configuration information indicates a pattern for a scheduling restriction window, wherein the pattern indicates whether the scheduling restriction window applies to a CC of the plurality of component carriers, wherein a measurement object is scheduled during the scheduling restriction window, and wherein data reception and/or transmission is scheduled outside of the scheduling restriction window.

15. The method of any of claims 12-14, wherein the configuration information indicates a bitmap string "(Fᵢ, Fᵢ₊₁, ..., Fᵢ₊ₙ)," wherein "Fᵢ" corresponds to an i^{th} measurement object and represents at least one of: a cell identifier, a physical cell identifier, a measurement object identifier, or an absolute radio frequency channel number, and wherein "n" represents a total number of measurement objects to which a scheduling restriction applies at any time.
